# EUROPEAN PATENT SPECIFICATION

(11) **EP 4 029 488 B1**
(45) Date of publication and mention of the grant of the patent: **08.05.2024**
(21) Application number: 22150894.8
(22) Date of filing: 11.01.2022
(51) Int. Cl.: A61H 3/06, G08G 1/005, G09B 21/00, G08G 1/02

(54) **A SYSTEM FOR PROVIDING INFORMATION TO PEDESTRIANS**
SYSTEM ZUR BEREITSTELLUNG VON INFORMATIONEN FÜR FUSSGÄNGER
SYSTÈME DE FOURNITURE D'INFORMATIONS AUX PIÉTONS

(30) Priority: 11.01.2021 GB 202100326; 07.10.2021 GB 202114361
(43) Date of publication of application: 20.07.2022
(73) Proprietor: Connor Specialist Paving Limited, Blackburn Lancashire BB1 2QS (GB)
(72) Inventor: Connor, Andrew, Blackburn, BB1 2QS (GB)
(74) Representative: McDonough, Jonathan

(56) References cited:
- WO-A1-2019/222210
- WO-A2-2020/012180
- KR-A- 20060 068 273
- US-A1- 2011 291 804

## Description

The present invention relates to a system for providing information to pedestrians. More particularly, but not exclusively, the present invention relates to a system for providing information to pedestrians comprising a plurality of protrusions, a wireless transmitter and a wireless receiver, the transmitter being adapted to transmit an information signal to the receiver and the receiver being adapted to generate an alert signal in response thereto.

Systems for providing information to pedestrians are known. Such systems typically find application at crossings and the like where they are of particular use to pedestrians who are blind or who have limited vision. As the pedestrian approaches the crossing they are provided with useful information by the system.

PCT/GB2019/051944 discloses an example of such a system. The system comprises a plurality of protrusions attached to the pavement surface. These provide a tactile indication to the pedestrian that they are approaching the crossing. Arranged between the protrusions is a plurality of passive RFID tags. The pedestrian carries a cane. Arranged within the cane is a transmitter. As the pedestrian approaches the crossing the signal transmitted by the transmitter excites the passive RFID tag which sends a return signal back to the cane. A receiver within the cane receives the return signal and converts it into speech.

A problem with such a system is that one requires a large number of passive RFID tags to effectively cover the crossing area.

The present invention seeks to overcome the problems of the prior art.

Accordingly, the present invention provides a system for providing information to pedestrians comprising a plurality of protrusions;
at least one active wireless transmitter adapted to transmit an information signal, the at least one wireless transmitter arranged in fixed relation to the protrusions; and,
a wireless receiver adapted to receive the information signal and generate an alert in response thereto;
wherein the transmitter and receiver are configured to communicate via a short range wireless protocol;
wherein the transmitter and receiver comprise a Protocol transmitter and Protocol receiver respectively, the Protocol transmitter being configured to transmit an information signal comprising a Protocol information signal and a Protocol ID;
wherein the Protocol receiver is configured to provide information to a remote location on receipt of the information signal from the Protocol transmitter;
the information provided by the Protocol receiver comprising at least one of (a) the direction of motion of the Protocol receiver relative to the Protocol transmitter and (b) confirmation of receipt of the information signal from the Protocol transmitter by the Protocol receiver.

The system according to the invention employs at least one active transmitter. Only a small number of such transmitters, possibly only one such transmitter, are therefore required. This substantially reduces installation cost, increases ease of installation and increases the reliability of the system.

Preferably the wireless transmitter is arranged between at least two of the plurality of protrusions.

Preferably the system further comprises a substrate, the plurality of protrusions and the transmitter being arranged on the substrate.

Preferably the substrate is a portion of a pavement.

Alternatively, the substrate is a portion of a railway platform.

Preferably the protrusions are connected together by connecting arms.

Preferably the system further comprises a resin layer covering the protrusions and transmitter.

Preferably the wireless receiver is a mobile phone.

Preferably the alert comprises at least one of a sound, speech, an image or video.

Preferably the transmitter is configured such that the information signal can be changed remotely.

Preferably the transmitter is configured such that it can be queried remotely.

Preferably the receiver is configured to generate an alert related to the strength of at least a portion of the received information signal.

Preferably the receiver is configured to generate an alert related to the content of at least a portion of the information signal.

Preferably the Protocol transmitter and Protocol receiver are configured to pair together.

Preferably the Protocol receiver is configured to provide information to a remote location on completion of the pairing, the information comprising at least one of (a) the existence of the pairing and (b) the direction of motion of the Protocol receiver relative to the Protocol transmitter.

Preferably the short range wireless protocol is Bluetooth

Alternatively the short range wireless protocol is any one of Zigbee, Z Wave or a custom short range wireless protocol.

The present invention will now be described by way of example only and not in any limitative sense with reference to the accompanying figures in which
Figure 1 shows a system according to the invention in schematic form;
Figure 2 shows the protrusions and transmitter of the system of figure 1 arranged on a substrate; and,
Figure 3 shows a further embodiment of a system according to the invention.

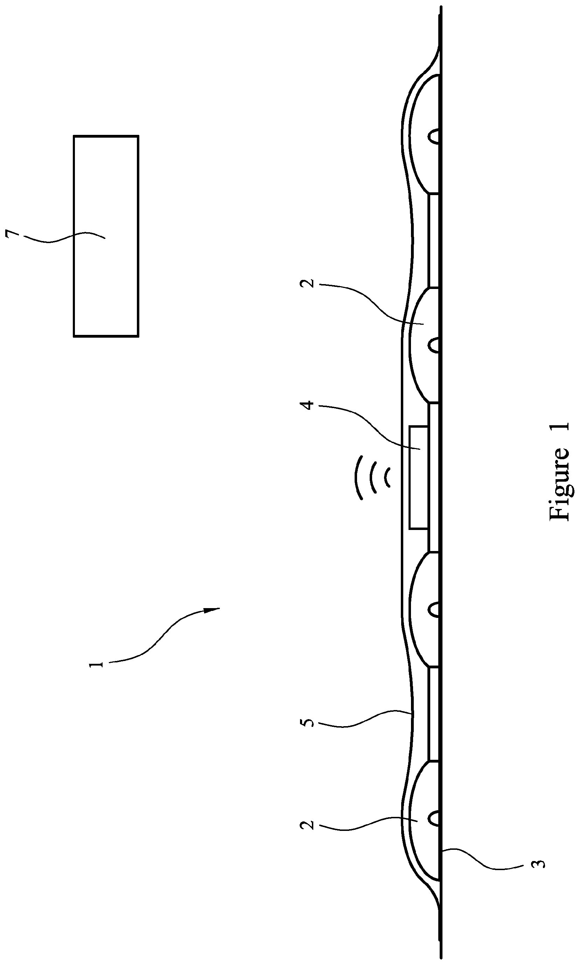

Figure 1 shows, in schematic form, a first embodiment of a system 1 according to the invention. The system 1 comprises a plurality of protrusions 2 arranged on a substrate 3. Arranged between the protrusions 2 is an active wireless transmitter 4. In this embodiment the active wireless transmitter 4 is configured to communicate by the Bluetooth short range wireless protocol and so is referred to as a Bluetooth transmitter 4, in particular a Bluetooth beacon 4. The protrusions 2 and Bluetooth transmitter 4 are covered in a resin layer 5.

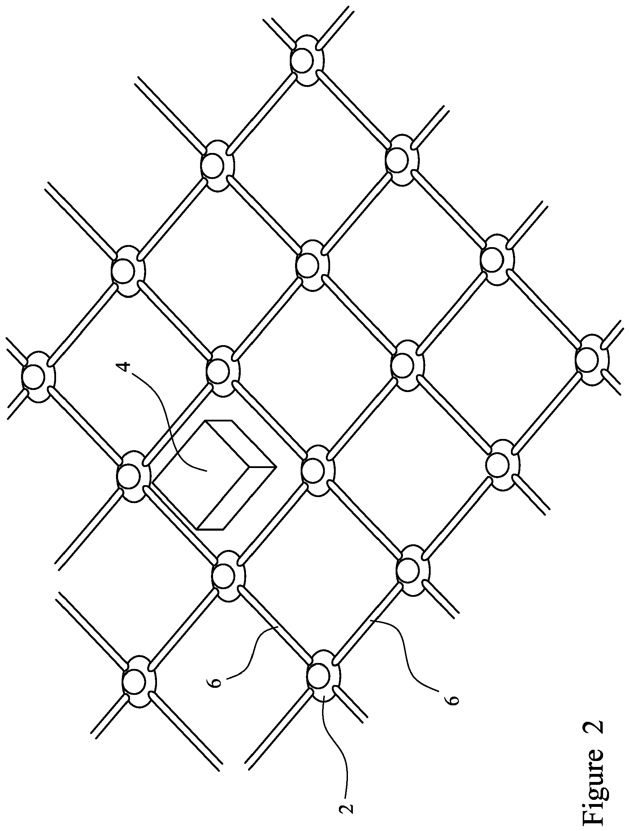

The protrusions 2 and Bluetooth transmitter 4 are shown in perspective view in figure 2. The protrusions 2 comprise a plurality of half domes 2 arranged in a regular array as shown. The domes 2 are connected together by connecting arms 6 which help to retain the domes 2 in fixed relation to each other.

The domes 2 and connecting arms 6 are arranged on a substrate 3. The substrate 3 is typically a portion of a pavement optionally proximate to a crossing point. The pavement surface may be any of a variety of materials including tarmac, brick or stone. Alternatively the substrate could be a portion of a railway platform. The domes 2 and connecting arms 6 are typically adhered to the substrate 3.

The Bluetooth transmitter 4 is arranged between the domes 2 and in fixed relation thereto. Typically the Bluetooth transmitter 4 is adhered to the substrate surface. Alternatively the Bluetooth transmitter 4 is arranged in a recess in the substrate 3. Arranging the Bluetooth transmitter 4 in a recess in the substrate 3 has the advantage of providing additional protection to the Bluetooth transmitter 4 however it requires damaging the surface of the substrate 3 which may not be desirable.

Once the protrusions 2 and Bluetooth transmitter 4 are in place they are preferably covered with a resin layer 5 which provides protection to the protrusions 2 and Bluetooth transmitter 4. The resin layer 5 may be clear or opaque. It may be coloured or colourless.

Returning back to figure 1, the system 1 further comprises a wireless receiver 7 which is also configured to communicate by the Bluetooth short range wireless protocol and so is referred to as a Bluetooth receiver 7. In this embodiment the Bluetooth receiver 7 is a mobile phone which comprises software adapted to employ the Bluetooth functionality of the phone 7.

In use a user carrying the phone 7 approaches a crossing. The user will know they are proximate to the crossing when they feel the protrusions 2 under their feet. This is a signal to the user to activate the software on the phone 7 if it is not already running. The Bluetooth beacon 4 transmits an information signal which comprises a Bluetooth information signal and a Bluetooth ID. The operation of Bluetooth is well known and so will not be described in detail. The Bluetooth receiver 7 receives the information signal and then generates an alert related to the content of the Bluetooth information portion of the information signal. Typically the Bluetooth information signal is converted by the Bluetooth receiver 7 into an alert comprising speech. Examples of such speech are 'the crossing is currently closed for maintenance' or 'You are currently at the crossing on the corner of Street A and Street B'. Alternative forms of alert comprise sounds, pictures or video.

In a further embodiment of the invention the Bluetooth receiver 7 generates an alert related to the content of the Bluetooth ID portion of the information signal. The Bluetooth ID uniquely identifies the Bluetooth beacon 4. By use of an appropriate look up table which converts Bluetooth ID into geographical location the Bluetooth receiver 7 can use the Bluetooth ID to generate an alert comprising speech identifying the position of the Bluetooth transmitter 4 and hence the user.

In a further embodiment of the invention the Bluetooth receiver 7 is configured to generate an alert related to the strength of at least a portion of the received information signal. This could be the strength of the Bluetooth information signal portion or Bluetooth ID portion or both. The Bluetooth receiver 7 is configured to estimate the distance between the Bluetooth transmitter 4 and Bluetooth receiver 7 based on the strength of the portion of the received information signal and generate an alert in the form of speech indicating the range from the Bluetooth transmitter 4. As the user approaches the Bluetooth transmitter 4 multiple alerts are generated indicating the decreasing distance.

The Bluetooth receiver 7 is configured to provide information to a remote location (typically a server) on receipt of the information signal from the Bluetooth transmitter 4. This could be by SMS or e-mail or other functionality provided by the Bluetooth receiver 7. Typical examples of such information comprise (a) the direction of motion of the Bluetooth receiver 7 relative to the Bluetooth transmitter 4 and (b) confirmation of receipt of the information signal from the Bluetooth transmitter 4 by the Bluetooth receiver 7. In respect of example (a), the Bluetooth receiver 7 will monitor the strength of the information signal over time and from this determine the approximate direction of travel of the Bluetooth receiver 7 and hence the user. Example (b) is particularly useful. From the information provided by the Bluetooth receiver 7 to the server the server is able to determine footfall past an individual Bluetooth transmitter 4. The server can also determiner the travel paths of individual users as they pass multiple Bluetooth transmitters 4.

In a further embodiment of the invention the Bluetooth transmitter 4 and Bluetooth receiver 7 are configured to pair together. This enables the Bluetooth transmitter 4 to provide additional functionality. In this embodiment the transmitter 4 is configured to provide information to a remote location (typically a server) on completion of the pairing. By way of example this information can comprise either or both of (a) the existence of the pairing and (b) the direction of motion of the Bluetooth receiver 7 relative to the Bluetooth transmitter 4. As above, example (a) is particularly useful as it enables the server to determine footfall past an individual Bluetooth transmitter 4 and also to determine the path of an individual user as they pass multiple Bluetooth transmitters 4.

In each of the above embodiments it is preferable that the Bluetooth transmitter 4 is configured such that the information signal can be changed remotely. This can be useful if, for example the crossing is closed for maintenance. The Bluetooth transmitter 4 can be reprogrammed so that a user hears a message to this effect when approaching the crossing. When maintenance is complete the information signal can then be returned to its original value.

In each of the above embodiments it is also preferable that the Bluetooth transmitter 4 is configured such that its state can be queried remotely. Typically, the status of a plurality of such Bluetooth transmitters 4 is monitored from a central server and any defective Bluetooth transmitters 4 are replaced when necessary.

In all of the above embodiments the transmitter 4 and receiver 7 communicate by Bluetooth. Accordingly the transmitter 4 and receiver 7 are referred to as a Bluetooth transmitter 4 and a Bluetooth receiver 7 respectively. In alternative embodiments of the invention the system employs transmitters 4 and receivers 7 which are configured to communicate by other examples of short range wireless protocols. Accordingly, more generally the transmitter 4 and receiver 7 may be referred to as a Protocol transmitter and Protocol receiver respectively. Similarly, more generally the information signal may comprise a Protocol information signal and Protocol ID. Examples of other short range wireless protocols include Zigbee, Z Wave or a custom short range wireless protocol.

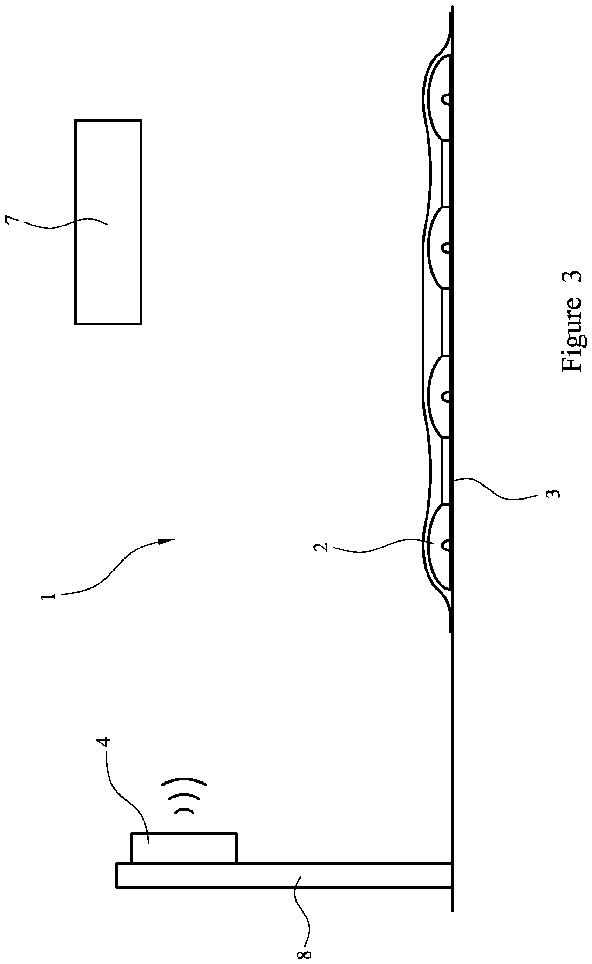

Shown in figure 3 is a further embodiment of a system 1 according to the invention. As before the system 1 comprises a plurality of protrusions 2 arranged on a substrate 3 which is typically a portion of a pavement or a railway platform. An active wireless transmitter 4 is arranged on a nearby post 8 in fixed relation to the protrusions 2. The wireless transmitter 4 is adapted to transmit an information signal. The system further comprises a wireless receiver 7 adapted to receive the information signal and generate an alert in response thereto. In this embodiment the transmitter 4 and receiver 7 communicate by Zigbee. Other short range wireless protocols are possible.

A plurality of active wireless transmitters can be connected to a central computer system. The connection is typically wireless. The computer system can be accessed by an interface which is typically either a dedicated application or a web based interface. The interface typically displays battery life for the active wireless transmitters and also their locations. The interface also allows a user to inspect analytic data such as the number of people using a particular crossing and at what times. The interface can also be used to program the active wireless transmitters. For example it can be used to change the information signal provided by the at least one active wireless transmitter to the wireless receiver.

## Claims

1. A system (1) for providing information to pedestrians comprising
a plurality of protrusions (2);
at least one active wireless transmitter (4) adapted to transmit an information signal, the at least one wireless transmitter (4) arranged in fixed relation to the protrusions (2); and,
a wireless receiver (7) adapted to receive the information signal and generate an alert in response thereto;
wherein the transmitter (4) and receiver (7) are configured to communicate via a short range wireless protocol;
wherein the transmitter (4) and receiver (7) comprise a Protocol transmitter (4) and Protocol receiver (7) respectively, the Protocol transmitter (4) being configured to transmit an information signal comprising a Protocol information signal and a Protocol ID;
wherein the Protocol receiver (7) is configured to provide information to a remote location on receipt of the information signal from the Protocol transmitter (4);
the information provided by the Protocol receiver (7) comprising at least one of (a) the direction of motion of the Protocol receiver (7) relative to the Protocol transmitter (4) and (b) confirmation of receipt of the information signal from the Protocol transmitter (4) by the Protocol receiver (7).

2. A system (1) as claimed in claim 1 wherein the wireless transmitter (4) is arranged between at least two of the plurality of protrusions (2).

3. A system (1) as claimed in either of claims 1 or 2, further comprising a substrate (3), the plurality of protrusions (2) and the transmitter (4) being arranged on the substrate (3).

4. A system (1) as claimed in claim 3, wherein the substrate (3) is a portion of a pavement.

5. A system (1) as claimed in claim 3, wherein the substrate (3) is a portion of a railway platform.

6. A system (1) as claimed in any one of claims 1 to 5, wherein the protrusions (2) are connected together by connecting arms (6).

7. A system (1) as claimed in any one of claims 1 to 6, further comprising a resin layer (5) covering the protrusions (2) and transmitter (4).

8. A system (1) as claimed in any one of claims 1 to 7, wherein the wireless receiver (7) is a mobile phone.

9. A system (1) as claimed in any one of claims 1 to 8, wherein the alert comprises at least one of a sound, speech, an image or video.

10. A system (1) as claimed in any one of claims 1 to 9, wherein the transmitter (4) is configured such that the information signal can be changed remotely.

11. A system (1) as claimed in any one of claims 1 to 10, wherein the transmitter (4) is configured such that it can be queried remotely.

12. A system (1) as claimed in any one of claims 1 to 11, wherein the receiver (7) is configured to generate an alert related to the strength of at least a portion of the received information signal.

13. A system (1) as claimed in any one of claims 1 to 12, wherein the receiver (7) is configured to generate an alert related to the content of at least a portion of the information signal.

14. A system (1) as claimed in claim 1, wherein the Protocol transmitter (4) and Protocol receiver (7) are configured to pair together.

15. A system (1) as claimed in claim 14, wherein the Protocol receiver (7) is configured to provide information to a remote location on completion of the pairing, the information comprising at least one of (a) the existence of the pairing and (b) the direction of motion of the Protocol receiver (7) relative to the Protocol transmitter (4).

16. A system (1) as claimed in any one of claims 1 to 15, wherein the short range wireless protocol is Bluetooth.

17. A system as claimed in any one of claims 1 to 15, wherein the short range wireless protocol is any one of Zigbee, Z Wave or a custom short range wireless protocol.

## Patentansprüche

1. Ein System (1), das Informationen für Fußgänger bereitstellt und Folgendes umfasst:
eine Vielzahl von Aufwölbungen (2);
mindestens einen aktiven drahtlosen Sender (4), der so ausgelegt ist, dass er ein Informationssignal sendet, wobei der mindestens eine drahtlose Sender (4) in einer festen Lage relativ zu den Aufwölbungen (2) angeordnet ist; und
einen drahtlosen Empfänger (7), der so ausgelegt ist, dass er das Informationssignal empfängt und als Reaktion hierauf einen Alarm auslöst;
wobei der Sender (4) und der Empfänger (7) so konfiguriert sind, dass sie über ein drahtloses Kurzstreckenprotokoll kommunizieren;
wobei der Sender (4) und der Empfänger (7) jeweils einen Protokollsender (4) und einen Protokollempfänger (7) aufweisen, wobei der Protokollsender (4) so konfiguriert ist, dass er ein Informationssignal sendet, das ein Protokollinformationssignal und eine Protokoll-ID umfasst;
wobei der Protokollempfänger (7) so konfiguriert ist, dass er beim Empfang des Informationssignals des Protokollsenders (4) Informationen an einen entfernten Standort übermittelt;
wobei die vom Protokollempfänger (7) übermittelten Informationen mindestens eines der folgenden Elemente umfassen: (a) die Bewegungsrichtung des Protokollempfängers (7) relativ zum Protokollsender (4), und (b) Bestätigung des Empfangs des Informationssignals des Protokollsenders (4) durch den Protokollempfänger (7).

2. Ein System (1) nach Anspruch 1, wobei der drahtlose Sender (4) zwischen mindestens zwei der Vielzahl von Aufwölbungen (2) angeordnet ist.

3. Ein System (1) nach Anspruch 1 oder 2, das ferner ein Substrat (3) umfasst, wobei die Vielzahl von Aufwölbungen (2) und der Sender (4) auf dem Substrat (3) angeordnet sind.

4. Ein System (1) nach Anspruch 3, wobei das Substrat (3) Teil eines Bürgersteigs ist.

5. Ein System (1) nach Anspruch 3, wobei das Substrat (3) Teil eines Bahnsteigs ist.

6. Ein System (1) nach einem der Ansprüche 1 bis 5, wobei die Aufwölbungen (2) durch Verbindungsarme (6) miteinander verbunden sind.

7. Ein System (1) nach einem der Ansprüche 1 bis 6, das ferner eine Harzschicht (5) aufweist, die die Aufwölbungen (2) und den Sender (4) bedeckt.

8. Ein System (1) nach einem der Ansprüche 1 bis 7, wobei es sich bei dem drahtlosen Empfänger (7) um ein Mobiltelefon handelt.

9. Ein System (1) nach einem der Ansprüche 1 bis 8, wobei der Alarm mindestens eines der folgenden Elemente umfasst: Ton, Sprache, ein Bild oder ein Video.

10. Ein System (1) nach einem der Ansprüche 1 bis 9, wobei der Sender (4) so konfiguriert ist, dass das Informationssignal aus der Ferne geändert werden kann.

11. Ein System (1) nach einem der Ansprüche 1 bis 10, wobei der Sender (4) so konfiguriert ist, dass er aus der Ferne abgefragt werden kann.

12. Ein System (1) nach einem der Ansprüche 1 bis 11, wobei der Empfänger (7) so konfiguriert ist, dass er einen Alarm auslöst, der in Zusammenhang mit der Stärke mindestens eines Teils des empfangenen Informationssignals steht.

13. Ein System (1) nach einem der Ansprüche 1 bis 12, wobei der Empfänger (7) so konfiguriert ist, dass er einen Alarm auslöst, der in Zusammenhang mit dem Inhalt mindestens eines Teils des Informationssignals steht.

14. Ein System (1) nach Anspruch 1, wobei der Protokollsender (4) und der Protokollempfänger (7) so konfiguriert sind, dass sie miteinander gepairt werden.

15. Ein System (1) nach Anspruch 14, wobei der Protokollempfänger (7) so konfiguriert ist, dass er nach dem Pairen Informationen an einen entfernten Standort übermittelt, wobei die Informationen mindestens eines der folgenden Elemente umfassen: (a) Bestätigung, dass das Pairen erfolgt ist, und (b) Bewegungsrichtung des Protokollempfängers (7) relativ zum Protokollsender (4).

16. Ein System (1) nach einem der Ansprüche 1 bis 15, wobei Bluetooth als das drahtlose Kurzstreckenprotokoll verwendet wird.

17. Ein System nach einem der Ansprüche 1 bis 15, wobei eines der folgenden Protokolle als das drahtlose Kurzstreckenprotokoll verwendet wird: Zigbee, Z Wave oder ein benutzerdefiniertes drahtloses Kurzstreckenprotokoll.

## Revendications

1. Système (1) de mise à disposition d'informations aux piétons comprenant :
une pluralité de protrusions (2) ;
au moins un émetteur actif sans fil (4) configuré pour transmettre un signal d'information, le au moins un émetteur (4) étant disposé en relation fixe par rapport aux protrusions (2) ; et,
un récepteur sans fil (7) configuré pour recevoir le signal d'information et générer une alerte en réponse à celui-ci ;
selon lequel l'émetteur (4) et le récepteur (7) sont configurés pour communiquer via un protocole sans fil à courte portée ;
selon lequel l'émetteur (4) et le récepteur (7) comprennent un émetteur de Protocole (4) et un récepteur de Protocole (7) respectivement, l'émetteur de Protocole (4) étant configuré pour transmettre un signal d'information comprenant un signal d'information de Protocole et un identifiant de Protocole ;
selon lequel le récepteur de Protocole (7) est configuré pour fournir de l'information à une position distante à la réception du signal d'information en provenance de l'émetteur de Protocole (4) ;
l'information fournie par le récepteur de Protocole (7) comprenant au moins un élément parmi (a) la direction de mouvement du récepteur de Protocole (7) par rapport à l'émetteur de Protocole (4) et (b) la confirmation de la réception du signal d'information en provenance de l'émetteur de Protocole (4) par le récepteur de Protocole (7).

2. Système (1) selon la revendication 1, selon lequel l'émetteur sans fil (4) est disposé entre au moins deux parmi la pluralité de protrusions (2).

3. Système (1) selon l'une quelconque des revendications 1 ou 2, comprenant en outre un substrat (3), la pluralité de protrusions (2) et l'émetteur (4) étant disposés sur le substrat (3).

4. Système (1) selon la revendication 3, selon lequel le substrat (3) fait partie d'un trottoir.

5. Système (1) selon la revendication 3, selon lequel le substrat (3) fait partie d'un quai de gare ferroviaire.

6. Système (1) selon l'une quelconque des revendications 1 à 5, selon lequel les protrusions (2) sont connectées les unes aux autres par des bras de connexion (6).

7. Système (1) selon l'une quelconque des revendications 1 à 6, comprenant en outre une couche de résine (5) recouvrant les protrusions (2) et l'émetteur (4).

8. Système (1) selon l'une quelconque des revendications 1 à 7, selon lequel le récepteur sans fil (7) est un téléphone mobile.

9. Système (1) selon l'une quelconque des revendications 1 à 8, selon lequel l'alerte comprend au moins un élément parmi un son, de la voix, une image ou un vidéo.

10. Système (1) selon l'une quelconque des revendications 1 à 9, selon lequel l'émetteur (4) est configuré de manière à permettre le changement du signal d'information à distance.

11. Système (1) selon l'une quelconque des revendications 1 à 10, selon lequel l'émetteur (4) est configuré de manière à être interrogeable à distance.

12. Système (1) selon l'une quelconque des revendications 1 à 11, selon lequel le récepteur (7) est configuré pour générer une alerte liée à la puissance d'au moins une partie du signal d'information reçu.

13. Système (1) selon l'une quelconque des revendications 1 à 12, selon lequel le récepteur (7) est configuré pour générer une alerte liée au contenu d'au moins une partie du signal d'information.

14. Système (1) selon la revendication 1, selon lequel l'émetteur de Protocole (4) et le récepteur de Protocole (7) sont configurés pour s'apparier l'un à l'autre.

15. Système (1) selon la revendication 14, selon lequel le récepteur de Protocole (7) est configuré pour fournir de l'information à une position distante à la fin de l'appariement, l'information comprenant au moins élément parmi (a) l'existence de l'appariement et (b) la direction de mouvement du récepteur de Protocole (7) par rapport à l'émetteur de Protocole (4).

16. Système (1) selon l'une quelconque des revendications 1 à 15, selon lequel le protocole sans fil de courte portée est le protocole Bluetooth.

17. Système selon l'une quelconque des revendications 1 à 15, selon lequel le protocole sans fil de courte portée est l'un parmi les protocoles Zigbee, Z Wave ou un protocole sans fil customisé de courte portée.
